## Europäisches Patentamt

## European Patent Office

## Office européen des brevets

(19)

(11) Veröffentlichungsnummer: **0 129 611**

**B1**

(12)

# EUROPÄISCHE PATENTSCHRIFT

(45) Veröffentlichungstag der Patentschrift:
04.02.87

(21) Anmeldenummer: **83106130.4**

(22) Anmeldetag: **23.06.83**

(51) Int. Cl.⁴: **A 01 D 41/12, A 01 F 12/46**

(54) **Verriegelungsvorrichtung für ein verschwenkbares Entleerungsrohr einer Erntebergungsmaschine, insbesondere Mähdrescher.**

(43) Veröffentlichungstag der Anmeldung:
**02.01.85 Patentblatt 85/1**

(45) Bekanntmachung des Hinweises auf die Patenterteilung:
**04.02.87 Patentblatt 87/6**

(84) Benannte Vertragsstaaten:
**BE DE FR GB IT SE**

(56) Entgegenhaltungen:
**BE-A-744 502**
**FR-A-1 522 011**
**FR-A-2 235 853**
**US-A-3 521 768**
**US-A-3 721 359**

(73) Patentinhaber: **DEERE & COMPANY, 1 John Deere Road, Moline Illinois 61265 (US)**

(72) Erfinder: **Rohwedder, Helmut, Rosenstrasse 12, D-6660 Zweibrücken 17 (DE)**
Erfinder: **Uhlendorff, Dieter, Heckfeldstrasse 9, D-6660 Zweibrücken 15 (DE)**

(74) Vertreter: **Sartorius, Peter, DEERE & COMPANY European Office, Patent Department Postfach 503 Steubenstrasse 36- 42, D-6800 Mannheim 1 (DE)**

EP 0 129 611 B1

LIBER, STOCKHOLM 1987

## Beschreibung

Die Erfindung bezieht sich auf eine Verriegelungsvorrichtung für ein verschwenkbares Entleerungsrohr einer Erntebergungsmaschine, insbesondere Mähdrescher, mit einer Klinke, die über einen als Gestänge ausgebildeten und um seine Längsachse verschwenkbar gelagerten Hebel aus ihrer das Entleerungsrohr in einer Transportstellung am Mähdrescher sichernden Stellung in eine Entriegelungsstellung durch Drehen des Hebels um seine Längsachse verschwenkbar bzw. drehbar ist.

Es ist bereits eine Verriegelungsvorrichtung bekannt (FR-A-2 235 853), die zur Arretierung eines verschwenkbaren Entleerungsrohres in einer Entladestellung und in einer Transportstellung dient. Die Verriegelungsvorrichtung besteht aus zwei über einen Winkelhebel miteinander verbundenen, gegen die Wirkung je einer Feder verstellbaren Gestängen, die über einen doppelarmigen Hebel mit einem Hydraulikzylinder verbunden sind, der gleichzeitig zur Verschwenkung des Entleerungsrohres dient und dabei auch die einzelnen Gestänge betätigt. Eine derartige Vorrichtung ist wegen der aufwendigen Gestängeanordnung sehr teuer.

Darüber hinaus ist ein Mähdrescher mit einem verschwenkbaren Entleerungsrohr bekannt (US-A-3 521 768), das über eine Verriegelungsvorrichtung in einer Transportlage arretierbar ist. Hierzu ist eine verschwenkbare Klinke vorgesehen, die nach Verschwenken des Entleerungsrohres in eine Transportlage einen Bolzen übergreift, so daß das Entleerungsrohr nicht weiter verschwenkt werden kann. Die Klinke läßt sich über eine vom Fahrerstand des Mähdreschers aus bedienbare Verstelleinrichtung betätigen. Es ist bereits eine Verriegelungsvorrichtung für ein Entleerungsrohr eines Mähdreschers der eingangs aufgeführten Art beannt (Ersatzteilkatalog der Firma DEERE & COMPANY, Druckverwerk PC/414607, August 1979, Seite 130/046, 130/042), die aus einer verschwenkbaren Verriegelungsklinke besteht, die über eine Zugfeder automatisch in eine Verriegelungsstellung schwenkbar ist, wenn das Entleerungsrohr an den Mähdrescher herangeschwenkt ist. Die Verriegelungsklinke ist mit einem als Gestänge ausgebildeten Hebel fest verbunden und kann durch Schwenken des Hebels aus der das Entleerungsrohr am Mähdrescher sichernden Stellung verschwenkt werden, so daß das Entleerungsrohr über ein weiteres mit dem Entleerungsrohr gelenkig verbundenes Gestänge aus der Transportlage in eine Arbeitsstellung verschwenkbar ist.

Der Erfindung liegt die Aufgabe zugrunde, die Verriegelungsvorrichtung derart auszubilden und anzuordnen, daß über diese das Entleerungsrohr am Mähdrescher festgestellt und nach Lösen der Verriegelungsvorrichtung über diese in eine gewünschte Position verschwenkt werden kann.

Diese Aufgabe ist dadurch gelöst worden, daß der Hebel auf dem Entleerungsrohr um eine aufrechte Achse aus einer die Klinke durch das Drehen um seine Längsachse zu betätigenden Stellung in eine Stellung verschwenkbar ist, in der er als Stellorgan zum Verschwenken des Entleerungsrohres in einer Arbeitsstellung dient, und daß der Hebel im Bereich der aufrechten Achse ein Mitnehmerteil zur Verstellung der Klinke aufweist, das in einer in der Klinke vorgesehenen Führung frei beweglich aufgenommen ist.

Durch die vorteilhafte Ausbildung und Anordnung der Verriegelungsvorrichtung, die nunmehr einmal zum Festlegen des Entleerungsrohres am Mähdrescher und zum anderen als Stellorgan zur Verschwenkung des Entleerungsrohres dient, wird eine kostengünstige Vorrichtung geschaffen, die mit wenig baulichem Aufwand zwei Funktionen erfüllt, so daß auf ein gesondertes Verstellorgan zum Verschwenken des Entleerungsrohres verzichtet werden kann. Hierzu ist es vorteilhaft, daß der Hebel im Bereich seiner Achse, die als Schwenkzapfen ausgebildet ist, das als Stange ausgebildete Mitnehmerteil aufweist, das parallel zum Hebel verläuft und in der am oberen Ende der Klinke vorgesehenen als Langlochbohrung ausgebildeten Führung verschiebbar sowie verschwenkbar aufgenommen ist. Da der Hebel im Bereich seiner Achse das als Stange ausgebildete Mitnehmerteil aufweist, läßt sich durch Drehen des Hebels um seine Längsachse die Klinke über das Mitnehmerteil nach unten drücken und somit in eine das Entleerungsrohr für einen Schwenkvorgang freigebende Stellung verstellen. Da das Mitnehmerteil in der Langlochöffnung der Klinke frei beweglich aufgenommen ist, läßt es eine Verschwenkung des Hebels um eine vertikal verlaufende Achse zu, so daß über diesen Hebel das Entleerungsrohr in eine Arbeitsstellung gezogen werden kann.

In weiterer Ausgestaltung der Erfindung ist es vorteilhaft, daß die Klinke als Winkelhebel ausgebildet ist, der in einer Halterung vertikal schwenkbar gelagert ist und einenends zur Aufnahme des Mitnehmerteils die Langlochbohrung, anderenends einen Verriegelungsarm mit einer nach unten gerichteten Aussparung aufweist. Durch die nach unten gerichtete Aussparung am vorderen Ende der Klinke bzw. des Verriegelungsarms läßt sich durch Anlage des Verriegelungsarmes an einen feststehenden Teil des Mähdreschers dieser soweit nach oben schwenken, bis die Aussparung den feststehenden Teil übergreift und somit das Entleerungsrohr am Mähdrescher festliegt.

In vorteilhafter Weise ist die Halterung als rechteckförmiger Winkel ausgebildet, der mit seinen beiden Schenkeln an den Außenumfang des Entleerungsrohres über Schraubenbolzen ldsbar angeschlossen ist. Dabei ist es vorteilhaft, daß zur Aufnahme der Klinke die Halterung im Bereich ihrer Eckkante eine Schlitzführung aufweist und die Schwenkachse der Klinke innerhalb der Halterung liegt. Durch die Verwendung einer Schlitzführung in der Halterung läßt sich der größte Teil der Winkelhebel ohne weiteres in der Halterung aufnehmen, wobei nur der äußere Teil der Klinke und der Teil zur Aufnahme der Langlochbohrung aus der Schlitzführung herausragt, so daß die Klinke weitgehend vor Beschädigungen geschützt ist. In vorteilhafter Weise ist die Klinke über eine Feder in eine Verriegelungsstellung verschwenkbar, die einenends an den vertikal verlaufenden Schenkel der Halterung, anderenends an den Verriegelungsarm zwischen der Schwenkachse und der Aussparung angeschlossen ist. Hierdurch wird auf einfache Weise eine selbsttätige Verriegelung des Entleerungsrohres am Sammelbehälter sichergestellt, wenn das Entleerungsrohr seine Transportlage erreicht hat.

In weiterer Ausgestaltung der Erfindung ist es vorteilhaft, daß eine Halterung zur schwenkbaren Aufnahme des Hebels zwei aufrecht stehende, über einen Steg verbundene Schenkel aufweist, wobei der eine Schenkel mit Bezug auf den Steg einen Winkel zwischen 90° und 100° einschließt und eine zylindrische Bohrung und der andere Schenkel eine Langlochbohrung aufweist. Vorteilhaft ist es ferner, daß der Steg der Halterung über eine Achse horizontal schwenkbar an die Oberseite des Entleerungsrohres angeschlossen ist. Außerdem ist es vorteilhaft, daß der Hebel endseitig zwei parallel zueinander verlaufende Stangen aufweist, wobei die eine Stange das Mitnehmerteil und die andere Stange den Teil zur Lagerung des Hebels in den Schenkeln der Halterung bildet. Da der Hebel um seine Querachse nach unten abkippen kann, kann der Hebel mit Bezug auf die Standfläche des Mähdreschers nach unten verstellt werden, so daß die Bedienungsperson nach Lösen der Klinke zum Sichern des Entleerungsrohres dieses leichter in die Arbeitsstellung ziehen kann. Hierzu ist es vorteilhaft, daß der eine Schenkel mit einer Langlochbohrung ausgerüstet ist und die andere Bohrung in dem zweiten Schenkel etwas größer ist als der Außendurchmesser des Hebels, so daß eine Verschwenkung des Hebels um eine horizontal verlaufende Achse gewährleistet ist. Durch die Verwendung der beiden parallel zueinander verlaufenden Stangen am Ende des Hebels, die die Form einer Gabel aufweisen, erhält man auf einfache Weise einmal eine Schwenkachse für den Hebel in der schwenkbar gelagerten Halterung und zum anderen ein Mitnehmerteil zur Verschwenkung der Klinke, wobei beim Schwenkvorgang des Hebels das Mitnehmerteil in der Langlochöffnung derart aufgenommen ist, daß der Hebel ohne weiteres um seine vertikal verlaufende Achse schwenken kann, ohne daß dabei das äußere Ende des Mitnehmerteils aus der Langlochöffnung der Klinke herausgeführt wird.

In der Zeichnung ist ein Ausführungsbeispiel einer Verriegelungsvorrichtung für ein Entleerungsrohr eines Mähdreschers nach der Erfindung schematisch dargestellt. Es zeigt:
Fig. 1 eine Seitenansicht eines Entleerungsrohres für einen Mähdrescher mit der zugehörigen Verriegelungsvorrichtung,
Fig. 2 eine Rückansicht des Entleerungsrohres mit der zugehörigen Verriegelungsvorrichtung,
Fig. 3 eine Draufsicht eines Hebels der Verriegelungsvorrichtung.

In der Zeichnung ist mit 2 ein Entleerungsrohr eines in der Zeichnung nicht dargestellten Mähdreschers bezeichnet, das zur Entleerung eines Sammelbehälters dient und das hierzu mit einer Entleerungsschnecke 4 ausgerüstet ist, die am Austragende in einer Stirnseite 6 sowie in weiteren in der Zeichnung nicht näher dargestellten Lagern drehbar aufgenommen ist. Das Entleerungsrohr 2 ist an einer Oberseite 8 des Mähdreschers mittels eines Drehflansches 10 drehbar gelagert, so daß es aus einer Transportlage, in der es in etwa parallel zur Außenseite des Mähdreschers verläuft, in eine Entleerungsstellung verschwenkbar ist, in der das Entleerungsrohr einen Winkel von ca. 90° zwischen der Längsachse des Entleerungsrohres und der Außenseite des mähdreschers einnimmt.

Auf der Oberseite des Entleerungsrohres befindet sich eine Halterung 12, die über einen Schwenkzapfen 14 mit der Oberseite des Entleerungsrohres 2 drehbar verbunden ist. Der Schwenkzapfen 14 kann über Muttern am Mantel des Entleerungsrohres 2 gesichert sein. Die Halterung 12 besteht aus zwei in etwa parallel zueinander verlaufenden, aufrecht stehenden Schenkeln 18 und 20, die über einen Steg 22 miteinander verbunden sind. Der Steg 22 weist zur Aufnahme des Schwenkzapfens 14 eine Bohrung 24 auf.

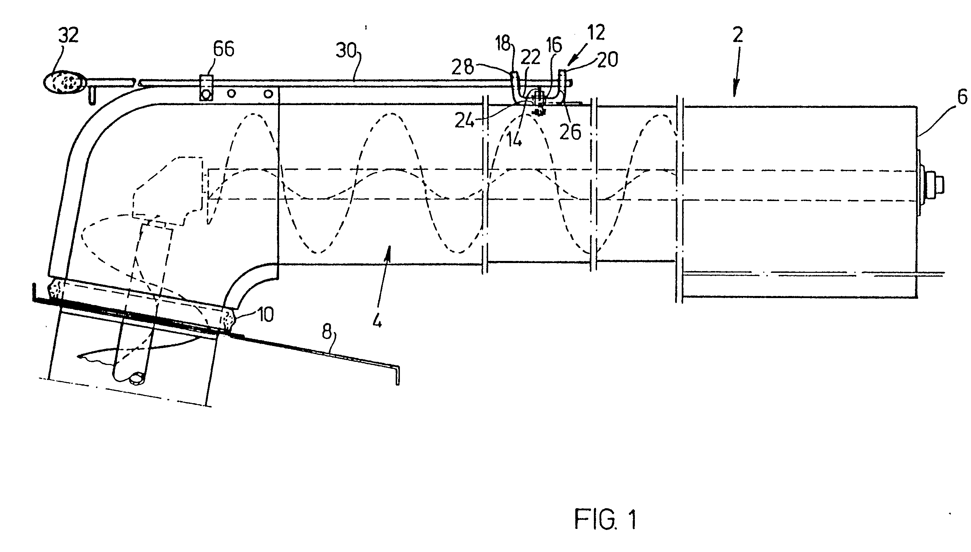

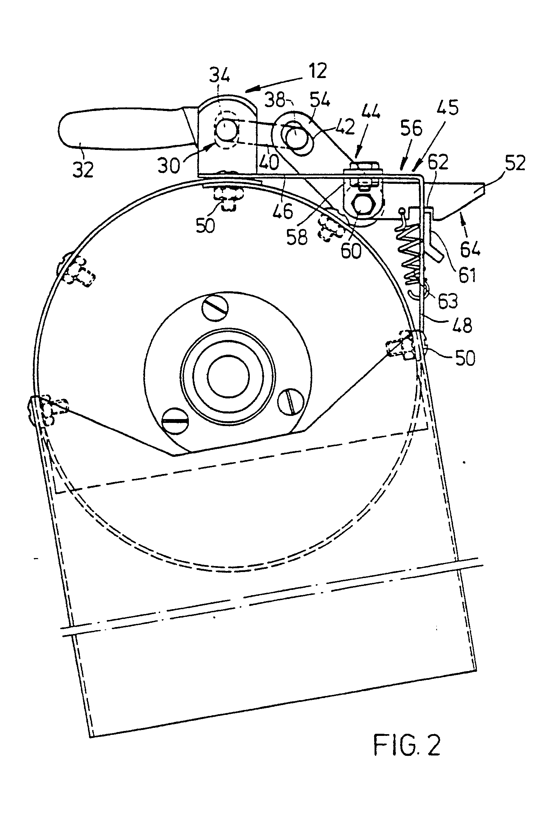

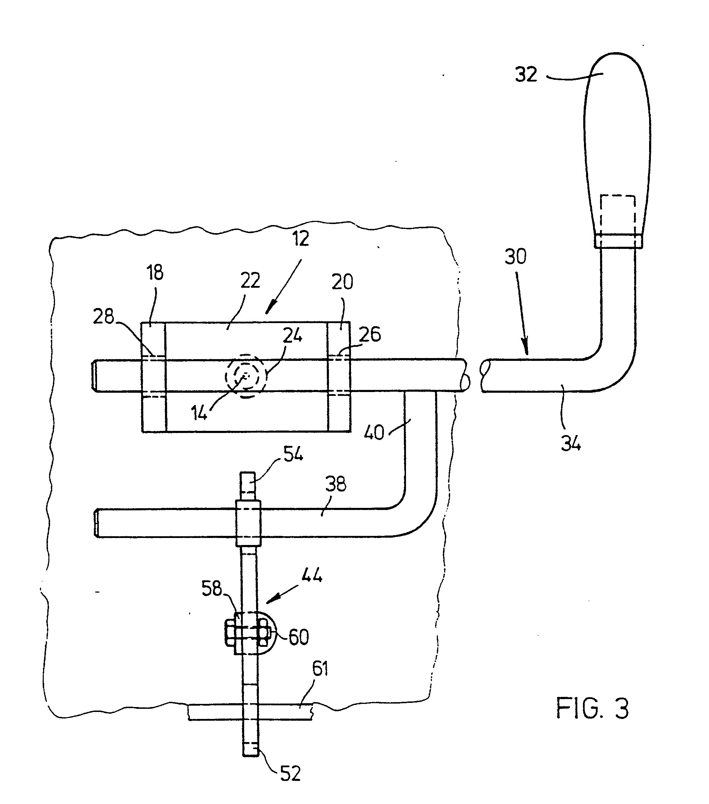

Wie aus Fig. 1 hervorgeht, ist der rechte Schenkel 20 mit einer Langlochbohrung 26 versehen, während der linke Schenkel 18 eine Bohrung 28 aufweist, deren Durchmesser etwas größer ist als der Außendurchmesser eines als Gestänge ausgebildeten Hebels 30, der endseitig um 90° abgebogen ist und einen Griff 32 trägt. Wie aus Fig. 3 hervorgeht, besteht der Hebel 30 aus dem Griff 32 und einer Stange 34, die etwa die Hälfte der Länge des horizontal verlaufenden Teils des Entleerungsrohres 2 ausmacht. Das dem Griff 32 gegenüberliegende Ende der Stange ist in der Langlochbohrung 26 des Schenkels 20 sowie in der zylindrischen Bohrung 28 des Schenkels 18 um eine horizontal verlaufende Achse schwenkbar aufgenommen. Am Ende der Stange 34 ist eine weitere als Mitnehmerteil ausgebildete Stange 38 vorgesehen, die über einen Steg 40 mit der Stange 34 fest verbunden ist. Die Stange 38 verläuft parallel zur Stange 34 und ragt (siehe Fig. 2) durch eine Langlochbohrung 42 einer Klinke 44. Die Klinke 44 ist als Winkelhebel ausgebildet und in einer Halterung 45 schwenkbar gelagert, die hierzu aus zwei rechtwinklig zueinander verlaufenden Schenkeln 46 und 48 besteht, die endseitig über Schraubenbolzen 50 an die Außenseite des Entleerungsrohres 2 lösbar angeschlossen ist. Die Klinke 44 bzw. der Winkelhebel weisen einen horizontal verlaufenden Verriegelungsarm 52 sowie einen geneigt verlaufenden Hebelarm 54 auf, der mit der Langlochbohrung 42 zur Aufnahme der als Mitnehmer ausgebildeten Stange 38 dient. Die Klinke 44 ist in einer in der Halterung 45 vorgesehenen Schlitzführung 56 aufgenommen und über ein Winkelstück 58 sowie einen Bolzen 60 an die Halterung 45 vertikal schwenkbar angeschlossen. Zur Arretierung der Klinke 44 an einem in der Zeichnung nur teilweise dargestellten Steg 61 des Mähdreschers weist die Klinke 44 eine nach unten offene Aussparung 62 auf, die den Steg 61 übergreift und somit das Entleerungsrohr 2 in der Transportstellung am Mähdrescher festlegt. Zwischen dem Bolzen 60 und der Aussparung 62 greift einenends eine Zugfeder 63 an den Verriegelungsarm 52 an, die mit ihrem unteren Ende anderenends an den vertikal verlaufenden Schenkel 48 lösbar angeschlossen ist und die Klinke 44 in einer das Entleerungsrohr 2 sichernden Stellung hält bzw. in diese Stellung verschwenkt, wenn das Entleerungsrohr seine Transportlage eingenonmen hat. Am äußeren Ende der Klinke 44 ist eine Führungsfläche 64 vorgesehen, die beim Einschwenken des Entleerungsrohres 2 gegen den Stegteil 61 zur Anlage kommt und die Klinke 44 solange nach oben schwenkt, bis die Aussparung 62 den Steg 61 übergreifen kann.

Soll das Entleerungsrohr 2 aus seiner in Fig. 2 dargestellten Transportlage verschwenkt werden, so wird mittels des Griffes 32 die Stange 34 der Verriegelungsvorrichtung um die Längsachse der Stange 34 geschwenkt, wobei die als Mitnehmer ausgebildete Stange 38 den Hebelarm 54 nach unten drückt, so daß dieser um den Bolzen 60 schwenken kann und dabei die Aussparung 62 den Steg 61 am Mähdrescher freigibt. Danach kann die Stange 34 mittels des Schwenkzapfens 14 horizontal verschwenkt und etwas nach unten abgekippt werden, da die Langlochbohrung 26 im Schenkel 20 eine Abwärtsverstellung der Stange 34 zuläßt. Der Hebel 30 wird soweit nach außen verschwenkt, so daß das Entleerungsrohr 2 über dem Hebel 30 nach außen gezogen werden kann. Hierzu wird die Stange 38 ebenfalls um eine vertikal verlaufende Achse geschwenkt und nach unten abgekippt, ohne daß die Stange 38 aus der Langlochbohrung 42 vollständig herausgeführt wird. Nach Beendigung des Entleerungsvorganges des Sammelbehälters kann das Entleerungsrohr 2 wieder in seine Transportlage verschwenkt werden, in der das Entleerungsrohr in etwa parallel zu der Außenseite des Sammelbehälters des Mähdreschers verläuft. Beim Einschwenkvorgang des Entleerungsrohres 2 in die Transportlage gleitet die Führungsfläche 64 am Steg 61 entlang, bis die Aussparung 62 den Steg 61 übergreift und dadurch die Klinke 44 mit ihrem Verriegelungsarm 52 eine horizontal verlaufende Lage gemäß Fig. 2 einnimmt, da die Feder 63 den Verriegelungsarm 52 nach unten zieht. Mittels der Feder 63 behält die Klinke 44 sowie der zur Betätigung der Klinke vorgesehene Hebel 30 die in Fig. 2 dargestellte Lage solange bei, bis der Hebel 30 erneut betätigt wird. Hat das Entleerungsrohr 2 sowie die zugehörige Klinke 44 die in Fig. 2 dargestellte Stellung erreicht, so kann der Hebel 30 ebenfalls wieder in seine Endlage verschwenkt werden, wobei der Hebel bzw. die zugehörige Stange 34 parallel zur Längsachse des horizontal verlaufenden Teils des Entleerungsrohres 2 verläuft. Um die Stange 34 ebenfalls am Entleerungsrohr 2 festzulegen, ist an der Oberseite des Entleerungsrohres 2 eine Gabel 66 vorgesehen, in die die Stange 34 von oben her eingeführt wird und einrastet, so daß ein unbeabsichtigtes Herausgleiten der Stange aus der Gabel 66 verhindert wird.

**Patentansprüche**

1. Verriegelungsvorrichtung für ein verschwenkbares Entleerungsrohr (2) einer Erntebergungsmaschine, insbesondere Mähdrescher, mit einer Klinke (44), die über einen als Gestänge (34) ausgebildeten und um seine Längsachse verschwenkbar gelagerten Hebel (30) aus ihrer das Entleerungsrohr in einer Transportstellung am Mähdrescher sichernden Stellung in eine Entriegelungsstellung durch Drehen des Hebels um seine Längsachse verschwenkbar bzw. drehbar ist, dadurch gekennzeichnet, daß der Hebel (30) auf dem Entleerungsrohr (2) um eine aufrechte Achse (14) aus einer die Klinke (44) durch das Drehen um seine Längsachse zu betätigenden Stellung in eine Stellung verschwenkbar ist, in der er als Stellorgan zum Verschwenken des Entleerungsrohres in einer Arbeitsstellung dient, und daß der Hebel (30) im Bereich der aufrechten Achse ein Mitnehmerteil (38) zur Verstellung der Klinke (44) aufweist, das in einer in der Klinke vorgesehenen Führung frei beweglich aufgenommen ist.

2. Vorrichtung nach Anspruch 1, dadurch gekennzeichnet, daß der Hebel (30) im Bereich seiner Achse, die als Schwenkzapfen (14) ausgebildet ist, das als Stange (38) ausgebildete Mitnehmerteil aufweist, das parallel zum Hebel (30) verläuft und in der am oberen Ende der Klinke (44) vorgesehenen, als Langlochbohrung (42) ausgebildeten Führung verschiebbar sowie verschwenkbar aufgenommen ist.

3. Vorrichtung nach Anspruch 1 oder 2, dadurch gekennzeichnet, daß die Klinke (44) als Winkelhebel ausgebildet ist, der in einer Halterung (45) vertikal schwenkbar gelagert ist und einenends zur Aufnahme des Mitnehmerteils die Langlochbohrung (42) ausgebildete Führung, anderenends einen Verriegelungsarm (52) mit einer nach unten gerichteten Aussparung (62) aufweist.

4. Vorrichtung nach Anspruch 3 dadurch gekennzeichnet, daß die Halterung (45) als rechteckförmiger Winkel ausgebildet ist, der mit seinen beiden Schenkeln (46, 48) an den Außenumfang des Entleerungsrohres (2) über Schraubenbolzen (50) lösbar angeschlossen ist.

5. Vorrichtung nach Anspruch 1 und 3, dadurch gekennzeichnet, daß zur Aufnahme der Klinke (44) die Halterung (45) im Bereich ihrer Eckkante eine Schlitzführung (56) aufweist und die Schwenkachse der Klinke (44) innerhalb der Halterung (45) liegt.

6. Vorrichtung nach Anspruch 3, dadurch gekennzeichnet, daß die Klinke (44) über eine Feder (63) in eine Verriegelungsstellung verschwenkbar ist, die einenends an den vertikal verlaufenden Schenkel (48) der Halterung (45), anderenends an den Verriegelungsarm (52) zwischen der Schwenkachse und der Aussparung (62) angeschlossen ist.

7. Vorrichtung nach Anspruch 1, dadurch gekennzeichnet, daß eine Halterung (12) zur schwenkbaren Aufnahme des Hebels (30) zwei aufrecht stehende, über einen Steg (22) verbundene Schenkel (18, 20) aufweist, wobei der eine Schenkel (18) mit Bezug auf den Steg (22) einen Winkel zwischen 90° und 100° einschließt und eine zylindrische Bohrung und der andere Schenkel (20) eine Langlochbohrung (26) aufweist.

8. Vorrichtung nach Anspruch 7, dadurch gekennzeichnet, daß der Steg (22) der Halterung (12) über eine Achse horizontal schwenkbar an die Oberseite des Entleerungsrohres (2) angeschlossen ist.

9. Vorrichtung nach Anspruch 2, 7 und 8, dadurch gekennzeichnet, daß der Hebel (30) endseitig zwei parallel zueinander verlaufende Stangen (34, 38) aufweist, wobei die eine Stange (38) das Mitnehmerteil und die andere Stange (34) den Teil zur Lagerung des Hebels in den Schenkeln (18, 20) der Halterung (12) bildet.

## Claims

1. Locking device for a swivelling discharge pipe (2) of a crop gathering machine, in particular a combine harvester, having a catch (44) which can be swung or rotated out of its position securing the discharge pipe in a transport position to the combine harvester into an unlocking position by way of a lever (30) in the form of a linkage (34) and mounted to be swingable about its longitudinal axis by rotating the lever about this axis, characterised in that the lever (30) can be swung about a vertical axis (14) on the discharge pipe (2) out of a position actuating the catch (44) by the rotation about its longitudinal axis into a position in which it serves as an adjusting means for swivelling the discharge pipe into a working position, and in the region of the vertical axis the lever (30) has a driver portion (38) for shifting the catch (44), the driver portion being accommodated in a guide provided in the catch so as to be freely movable therein.

2. Device according to claim 1, characterised in that the lever (30) comprises the driver portion, which is in the form of a rod (38), in the region of its axis which is in the form of a pivot pin (14), the driver portion extending parallel to the lever (30) and being slidably and swingably accommodated in the guide in the form of a slotted hole (42) provided at the upper end of the catch (44).

3. Device according to claim 1 or 2, characterised in that the catch (44) is in the form of an angle lever mounted to be vertically swingable in a support (45) and has at one end the guide in the form of a slotted hole (42) for accommodating the driver portion and at the other end a locking arm (52) with a downwardly directed recess (62).

4. Device according to claim 3, characterised in that the support (45) is in the form of a rectangular angle member detachably connected by its two arms (46, 48) to the outer periphery of the discharge pipe (2) by means of screw bolts (50).

5. Device according to claims 1 and 3, characterised in that the support (45) has a slot guide (56) in the region of its corner edge for receiving the catch (44) and the pivot axis of the catch (44) is located inside the support (45).

6. Device according to claim 3, characterised in that the catch (44) can be swung into a locking position by means of a spring (63) connected at one end to the vertically extending arm (48) of the support (45) and at the other end to the locking arm (52) between the pivot axis and the recess (62).

7. Device according to claim 1, characterised in that a mount (12) for receiving the lever (30) so that it is swingable has two upright arms (18, 20) connected by a cross-piece (22), one arm (18) enclosing an angle between 90° and 100° with respect to the cross-piece (22) and having a cylindrical hole and the other arm (20) having a slotted hole (26).

8. Device according to claim 7, characterised in that the cross-piece (22) of the mount (12) is connected to the top of the discharge pipe (2) to be horizontally swingable through the medium of a pivot pin.

9. Device according to claims 2, 7 and 8, characterised in that the lever (30) is provided endwise with two rods (34, 38) running parallel one to the other, the one rod (38) forming the driver portion and the other rod (34) forming the part for mounting the lever in the arms (18, 20) of the mount (12).

## Revendications

1.- Dispositif de verrouillage pour une gaine ou goulotte de vidage (2) d'une machine de récolte, en particulier d'une moissonneuse-batteuse, comportant un linguet (44) qui peut pivoter ou tourner grâce à un levier (30) conformé en tringle (34) et monté de façon à pouvoir pivoter autour de son axe longitudinal en passant de sa position de blocage de la gaine de vidage dans une position de transport sur la moissonneuse-batteuse à une position de déverrouillage, par rotation du levier autour de son axe longitudinal, caractérisé en ce que le levier (30) peut passer en pivotant sur la gaine de vidage (2) autour d'un axe vertical (14) d'une position d'actionnement du linguet (44) par rotation autour de son axe longitudinal à une position dans laquelle il sert d'organe de réglage pour faire pivoter la gaine de vidage dans une position de travail, et en ce que le levier (30) comporte, au voisinage de l'axe vertical, un élément d'entraînement (38) pour le déplacement du linguet (44), qui est reçu de façon à pouvoir se déplacer librement dans un guide prévu dans le linguet.

2.- Dispositif selon la revendication 1, caractérisé en ce que le levier (30) comporte, au voisinage de son axe qui est réalisé sous la forme d'un tourillon (14), l'élément d'entraînement conformé en tige (38), qui s'étend parallèlement au levier (30) et est reçu de façon à pouvoir coulisser ainsi que pivoter dans le guide conformé en trou oblong (42) prévu à l'extrémité supérieure du cliquet (44).

3.- Dispositif selon la revendication 1 ou 2, caractérisé en ce que le cliquet (44) se présente sous la forme d'un levier coudé qui est monté de façon à pouvoir pivoter verticalement dans un support (45) et qui comporte à une extrémité le guide conformé en trou oblong (42) pour la réception de l'élément d'entraînement et, à l'autre extrémité, un bras de verrouillage (52) comportant un évidement (62) dirigé vers le bas.

4.- Dispositif selon la revendication 3, caractérisé en ce que le support (45) est réalisé sous la forme d'une cornière à angle droit qui est raccordée de façon amovible par ses deux branches (46, 48) à la périphérie extérieure de la gaine de vidage (2), par l'intermédiaire de boulons (50).

5.- Dispositif selon les revendications 1 et 3, caractérisé en ce que, pour recevoir le linguet (44), le support (45) comporte au voisinage de son arête un guide en forme de fente (56), et en ce que l'axe de pivotement du linguet (44) se trouve à l'intérieur du support (45).

6.- Dispositif selon la revendication 3, caractérisé en ce que le linguet (44) peut pivoter, sous l'action d'un ressort (63), jusqu'à une position de verrouillage, ce ressort étant raccordé par une extrémité à la branche s'étendant verticalement (48) du support (45) et, par son autre extrémité, au bras de verrouillage (52), entre l'axe de pivotement et l'évidement (62).

7.- Dispositif selon la revendication 1, caractérisé en ce que le support (12) servant à recevoir le levier (30) de façon qu'il puisse pivoter comporte deux branches verticales (18, 20) reliées par une embase (22), une branche (18) faisant avec l'embase (22) un angle compris entre 90° et 100- et comportant un trou cylindrique, tandis que l'autre branche comporte un perçage (26) conformé en trou oblong.

8.- Dispositif selon la revendication 7, caractérisé en ce que l'embase (22) du support (12) est raccordée par un axe, de façon à pouvoir pivoter horizontalement, à la face supérieure de la gaine de vidage (2).

9.- Dispositif selon les revendications 2, 7 et 8, caractérisé en ce que le levier (30) comporte à ses extrémités deux tiges (34, 38) s'étendant parallèlement l'une à l'autre, l'une des tiges (38) constituant l'élément d'entraînement, tandis que l'autre tige (34) constitue l'élément servant au montage du levier dans les branches (18, 20) du support (12).

FIG. 1

0 129 611

FIG. 2

FIG. 3